# FASCICULE DE BREVET EUROPEEN

(11) **EP 3 727 739 B1**
(45) Date de publication et mention de la délivrance du brevet: **17.08.2022**
(21) Numéro de dépôt: 18842635.7
(22) Date de dépôt: 20.12.2018
(51) Int. Cl.: B23K 20/12, B23K 20/233, B23K 103/10

(54) **OUTIL POUR REALISER UNE SOUDURE PAR FRICTION MALAXAGE AVEC UN PION TRONCONIQUE ; PROCEDE DE SOUDAGE DE DEUX PIECES UTILISANT UN TEL OUTIL**
WERKZEUG ZUM REIBRÜHRSCHWEISSEN MIT EINEM KEGELSTUMPFFÖRMIGEN STIFT; VERFAHREN ZUM SCHWEISSEN VON ZWEI TEILEN MIT EINEM SOLCHEN WERKZEUG
TOOL FOR PERFORMING A FRICTION STIR WELDING WITH A FRUSTOCONICAL PIN; METHOD FOR WELDING TWO PARTS USING SUCH A TOOL

(30) Priorité: 22.12.2017 FR 1763028
(43) Date de publication de la demande: 28.10.2020
(73) Titulaire: Constellium Issoire, 63500 Issoire (FR)
(72) Inventeur: ODIEVRE, Thierry, 38500 Voiron (FR); ARMENIO, Jean-Pierre, 38340 Moirans (FR); BELLOT, Daniel, 38140 Izeaux (FR)
(74) Mandataire: Constellium - Propriété Industrielle
(86) Numéro de dépôt international: PCT/FR2018/053438
(87) Numéro de publication internationale: WO 2019/122736

(56) Documents cités:
- CN-A- 104 646 820
- FR-A1- 3 019 766
- US-A1- 2006 043 151
- US-A1- 2011 240 374
- US-A1- 2014 166 731
- US-A1- 2015 041 521

## Description

### DOMAINE TECHNIQUE

Le domaine technique de l'invention est la soudure par friction malaxage. L'invention concerne particulièrement la soudure de pièces épaisses selon une grande longueur, et plus particulièrement un outil et un procédé mettant en oeuvre un tel outil.

Elle peut s'appliquer à la fabrication de composants, notamment de composants en alliages d'aluminium, en particulier pour l'industrie aéronautique.

### ART ANTERIEUR

Le soudage par friction-malaxage, usuellement désigné par l'acronyme FSW (Friction Stir Welding) a été développé au cours des années 90. Il fait par exemple l'objet des documents WO93/10935 et WO95/26254. Cette technique consiste à assembler deux pièces métalliques, disposées l'une contre l'autre, à l'aide d'un outil de soudure mis en rotation par rapport à ces dernières.

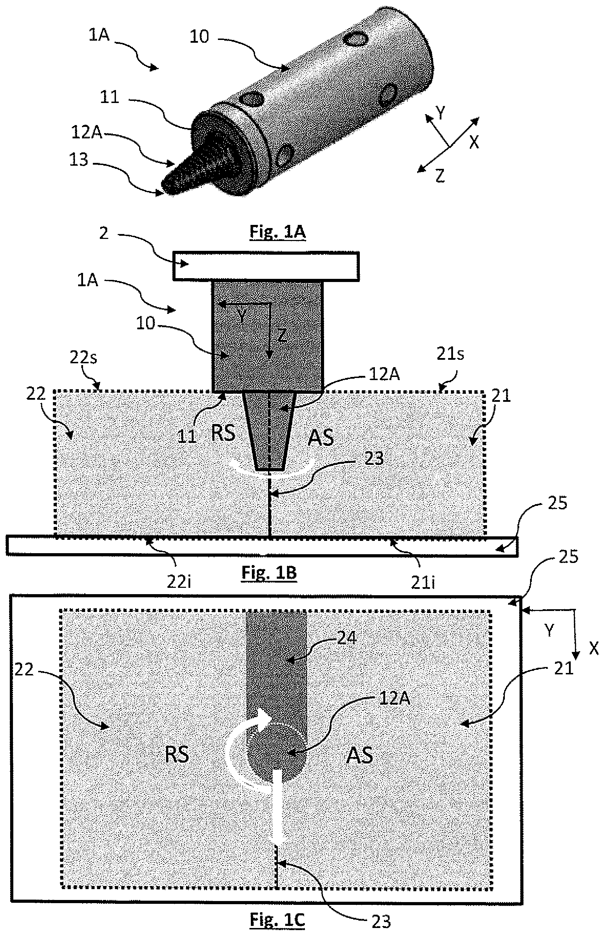

La figure 1A représente un outil de soudure 1A selon l'art antérieur. Il est composé d'un corps principal cylindrique 10, définissant un épaulement 11, et d'un pion 12A. L'outil 1A est mobile en rotation, la vitesse de rotation R étant comprise entre 100 et 1500 tours par minute. La figure 1B est une coupe représentant deux pièces 21 et 22 maintenues l'une contre l'autre, et reposant sur une enclume 25. Les pièces sont bridées l'une contre l'autre, sans jeu. L'outil de soudure 1A est porté par un support 2 permettant sa mise en rotation et sa translation le long des pièces. Il est amené au contact des pièces à souder, au niveau d'une interface 23 s'étendant entre les deux pièces. Dans la phase de démarrage, le frottement du pion 12A sur les pièces génère un échauffement local, entraînant un ramollissement de la matière constituant ces dernières. Le pion 12A pénètre alors progressivement dans les pièces, en extrudant la matière malaxée, jusqu'à ce que l'épaulement 11 de l'outil vienne en appui contre lesdites pièces. L'épaulement 11 exerce alors une pression sur les pièces 21 et 22, le long de leur interface 23. La rotation de l'épaulement, contre la surface des pièces, génère une friction induisant un échauffement local de la matière, autour de l'outil. Sous l'effet de l'élévation de la température, la matière métallique composant chaque pièce subit une déformation plastique, au voisinage du pion 12A. La cinématique du pion entraîne un malaxage de la matière ramollie au voisinage de l'interface. L'outil rotatif est alors translaté le long de l'interface 23, la vitesse de translation ou vitesse d'avance V étant généralement comprise entre 30mm/min et 500mm/min. La figure 1C représente une vue de dessus de la figure 1B et montre le déplacement de l'outil de soudure le long de l'interface 23, le mouvement de l'outil combinant une rotation à la vitesse de rotation R et une translation à la vitesse d'avance V. Le sens de rotation est indiqué sur les figures 1B et 1C, l'outil tournant du côté avance AS (« advancing side ») vers le côté retrait RS (« retreating side »). Le côté avance AS est le côté où le sens local de la surface de l'outil dû à la rotation de l'outil et le sens de soudage sont identiques, la pièce (21) est située côté avance. Le côté retrait est le côté où le sens local de la surface de l'outil dû à la rotation de l'outil et le sens de soudage sont opposés, la pièce (22) est située côté retrait.

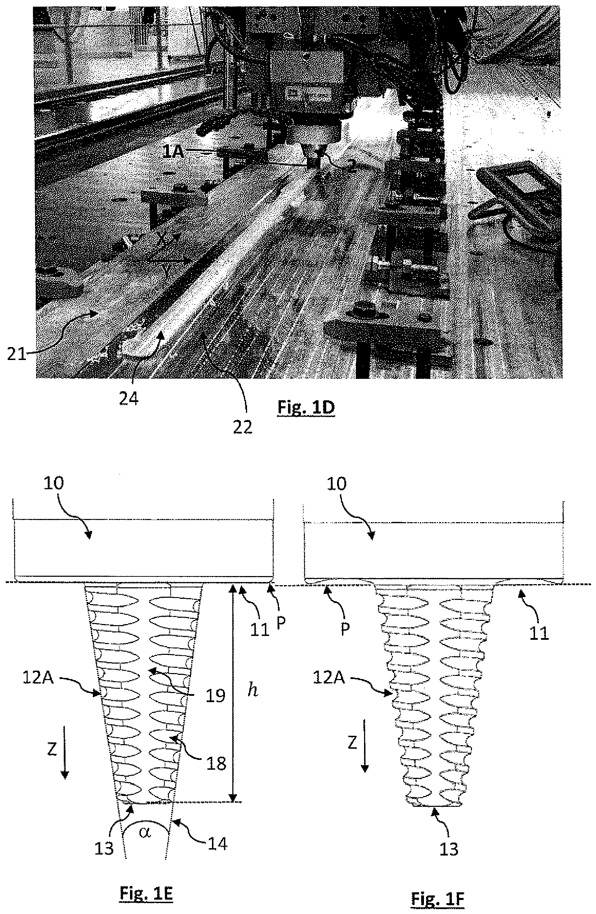

Le refroidissement de la matière malaxée forme un joint 24, ou cordon de soudure, le long de l'interface 23. Ainsi, une soudure est réalisée de proche en proche, sans fusion, par une liaison métal/métal. Le joint de soudure 24 se forme suivant l'avancement progressif de l'outil le long de l'interface. Lorsque l'opération de soudage est achevée, une phase de retrait permet de retirer l'outil des pièces assemblées. La figure 1D est une photographie d'un poste de soudure. On a représenté un support 2 maintenant un outil de soudure 1A dont le pion 12A est introduit entre les deux plaques 21 et 22. L'outil de soudure 1A tourne et se translate, l'axe de translation étant l'axe X représenté sur cette figure.

On réalise ainsi une soudure sans métal d'apport, le joint 24 entre les pièces étant constitué uniquement de la matière formant les pièces assemblées. Un autre avantage lié à la soudure FSW réside dans le fait que la température est plus faible relativement aux procédés de soudure usuels ; cela améliore les propriétés mécaniques du composant résultant du soudage, et cela réduit les déformations. Le procédé est également aisément automatisable, présente peu de risque, et peut permettre d'effectuer des soudures de fortes épaisseurs, selon de grandes longueurs, en une seule passe. Lorsque les paramètres de soudage ont été établis, la répétabilité de la qualité de la soudure constitue un autre avantage du procédé.

US20110240374 divulgue l'utilisation du soudage par friction malaxage pour durcir la surface d'un outil de forage. Un tel procédé comprend généralement la rotation d'un outil de soudage par friction-malaxage en contact avec la surface jusqu'à ce qu'une partie de l'outil pénètre dans la pièce à traiter. L'outil de soudage par friction malaxage est ensuite déplacé (tout en tournant) à travers une région prédéterminée de la surface de la pièce, créant ainsi une zone de malaxage par friction. La zone de malaxage par friction est généralement considérablement plus dure, et donc plus résistante à l'usure, que le matériau d'origine qui compose le corps de la pièce à traiter.

Le soudage par friction malaxage est une technologie prometteuse pour l'assemblage de pièces d'aluminium. Appliquée à l'aluminium, la soudure par friction malaxage fait l'objet de la norme ISO EN 25239. Elle permet d'assembler des alliages d'aluminium à haute résistance, par exemple des alliages d'aluminium des séries 2000, 6000 et 7000.

Dans le domaine de l'aéronautique, ce procédé constitue une alternative aux moyens de fixations traditionnels, tels le rivetage ou le boulonnage, pour fabriquer des composants tels que des panneaux de voilure, des nervures ou des panneaux de fuselage. La soudure par FSW s'accompagne d'une réduction de la masse du composant assemblé, ainsi qu'un gain de temps pour réaliser l'assemblage. En dehors de l'aéronautique, le procédé par FSW peut trouver des applications dans l'industrie du transport, notamment le transport naval ou ferroviaire ainsi que l'automobile.

La soudure par FSW peut concerner d'autres matériaux que l'aluminium, par exemple le cuivre pour la fabrication d'emballages destinés à confiner du combustible nucléaire irradié.

De nombreuses études ont été menées dans le but d'optimiser les performances de la soudure par FSW. CN104646820 (base du préambule de la revendication 1) divulgue un procédé de soudage double face améliorant les propriétés du joint soudé. FR3019766 divulgue un procédé d'assemblage de deux matériaux par friction malaxage comprenant une étape de chauffage du deuxième matériau à une température prédéterminée avec l'interface avec le premier matériau, tandis qu'un élément isolant thermique est disposé à l'interface entre les deux matériaux, l'élément isolant étant remplacé par le premier et le deuxième matériau à l'état pâteux au moment du soudage. US 2015/041521 divulgue un procédé de soudage par friction de tôles d'acier où les conditions de soudage sont définies en fonction de la composition chimique du produit. Ces études peuvent adresser la forme de l'outil et en particulier celle du pion. En effet, le pion conditionne le malaxage de la matière et la circulation de la matière échauffée. Il est généralement de forme conique. US 2006/043151 divulgue un outil où le pion et l'épaulement sont attachés. Les optimisations du pion pour améliorer la qualité de soudure concernent essentiellement la modification des rainures et/ou des méplats qui peuvent être ménagés en surface dudit pion. Les rainures forment un filet à la surface du pion de façon à engendrer des courants de matière ramollie au voisinage du pion. Les méplats s'étendant le long du pion permettent principalement d'améliorer le malaxage.

Les inventeurs ont conçu une forme spécifique d'outil rotatif de soudure par friction malaxage, permettant d'effectuer une soudure aux performances améliorées. Plus précisément, un des objectifs recherché est d'effectuer une soudure de deux pièces épaisses, typiquement d'épaisseur supérieure à 20 ou 25 mm, selon une longueur de plusieurs mètres, en particulier supérieure à 10 mètres, voire supérieure à 15 mètres en une seule passe, c'est-à-dire sans casse ou sans changement d'outil sur toute la longueur de la soudure. C'est l'objet de l'invention décrite ci-après.

### EXPOSE DE L'INVENTION

Un premier objet de l'invention est un outil, destiné à un poste de soudure par friction malaxage, défini selon la revendication 1.

L'outil est apte à être mobile en rotation et comporte :
- un corps, de préférence cylindrique, définissant une surface transversale, formant un épaulement ;
- un pion, s'étendant, depuis l'épaulement, selon un axe longitudinal, de préférence perpendiculaire à l'épaulement, vers une extrémité, le pion s'affinant entre l'épaulement et l'extrémité, la distance entre l'extrémité et l'épaulement correspondant à une hauteur du pion.

Le pion peut comporter :
- une partie proximale, adjacente de l'épaulement, et s'étendant, à partir de l'épaulement vers l'extrémité, selon au moins 10% ou 20% de la hauteur du pion;
- une partie distale, adjacente de l'extrémité et s'étendant, à partir de l'extrémité, vers l'épaulement, selon au moins 1% ou 2% de la hauteur du pion, la partie distale étant inscrite dans un tronc conique, le tronc conique définissant une surface conique, dite surface de prolongement, prolongeant le tronc conique jusqu'à l'épaulement, la surface de prolongement délimitant un volume tronconique.

Le pion s'étend alors à l'extérieur du volume tronconique délimité par la surface de prolongement.

Par être inscrit dans un tronc conique, on entend être tangent au tronc conique en différents points répartis selon au moins 1% ou 2% de la hauteur du pion. La partie distale n'est pas nécessairement située à l'extrémité du pion. Elle peut être distante au moins 1% ou 2% ou même 4% ou plus de l'extrémité mais est nécessairement située entre l'extrémité et la partie proximale. Le tronc conique, dans lequel est inscrite la partie distale, forme une enveloppe s'étendant autour de la partie distale.

La surface transversale, formant l'épaulement, peut être plane, ou incurvée par rapport à un plan transversal, en formant un angle, par rapport au plan, inférieur à 10°, voire à 5°.

De préférence, dans la partie proximale:
- la surface conique définit, dans un plan de coupe radial, perpendiculaire à l'axe longitudinal, un contour, notamment circulaire, avantageusement centré autour de l'axe longitudinal ;
- le pion présente, dans le plan de coupe, un périmètre de telle sorte que le périmètre s'étend autour du contour circulaire.

Dans la partie proximale, la surface de prolongement peut décrire une équation de type *x*² + *y*² = *z*²(tan *α*)², le pion présentant une surface périphérique dont les points sont tels que *x*² + *y*² = *k*²(*x, y, z),* avec *k*(*x, y, z*)² > *z*²(tan *α*)²où *x, y* sont des coordonnées radiales, dans un plan radial perpendiculaire à l'axe longitudinal, z est une coordonnée selon l'axe longitudinal, *k(x, y, z)* est une fonction scalaire décrivant la surface périphérique, et *α* représente le demi-angle au sommet défini par le tronc conique.

Dans la partie proximale, le pion peut décrire, dans un plan parallèle à l'axe longitudinal, et passant par ce dernier, une surface externe s'étendant selon une partie d'une courbe, telle que cette courbe soit tangente à la surface de prolongement. De manière préférée, la courbe est aussi tangente à l'épaulement. De manière préférée, la courbe est une ellipse ou une hyperbole ou une parabole. L'ellipse, l'hyperbole ou la parabole peut alors être tangente d'une part au tronc conique dans lequel est inscrite la partie distale, et/ou d'autre part à l'épaulement.

En d'autres termes et conformément à l'invention, le pion décrit une surface externe inscrite dans une enveloppe décrivant, dans un plan parallèle à l'axe longitudinal (Z) et passant par ce dernier,
- dans la partie proximale, un profil suivant une courbe étant une partie d'une ellipse ou d'une hyperbole ou d'une parabole ;
- dans la partie distale, un profil suivant un tronc conique
et tel que la courbe est tangente au tronc conique dans lequel est inscrite la partie distale, c'est-à-dire à la surface de prolongement.

La courbe partie d'une ellipse ou d'une hyperbole ou d'une parabole est donc, conformément à l'invention, tangente à la surface de prolongement.

De manière préférée, la courbe est tangente à l'épaulement. De manière préférée, la courbe partie d'une ellipse ou d'une hyperbole ou d'une parabole est tangente à l'épaulement.

De manière préférée, la courbe est tangente à la surface de prolongement et à l'épaulement. De manière préférée, la courbe partie d'une ellipse ou d'une hyperbole ou d'une parabole est tangente à la surface de prolongement et à l'épaulement.

La partie proximale peut s'étendre, à partir de l'épaulement, jusqu'à 25% de la hauteur du pion, ou jusqu'à 33% de la hauteur du pion, ou jusqu'à 50% de la hauteur du pion. La partie distale peut s'étendre, à partir de l'extrémité, jusqu'à 2% de la hauteur du pion, ou jusqu'à 5% de la hauteur du pion, ou jusqu'à 10% de la hauteur du pion voire même jusqu'à 20 ou 25%

Dans un mode de réalisation, des rainures sont ménagées en surface du pion pour former un filet formant tout ou partie d'une hélice ou hélice spiralée s'étendant entre l'extrémité et l'épaulement. Le filet peut notamment être agencé pour déplacer, lors de la soudure, une matière ramollie vers l'extrémité du pion. Un ou plusieurs méplats peuvent ménagés dans le pion, le méplat s'étendant entre l'extrémité et l'épaulement.

L'outil de soudure peut notamment être configuré pour être disposé sur un support de manière à être mobile en rotation par rapport à ce dernier, le support et l'outil formant une tête de soudage.

Le pion et/ou le corps peuvent notamment être constitués d'un matériau compatible avec une utilisation à haute température et, de préférence, un matériau choisi parmi :
- un acier trempé, de type acier à outil, présentant de préférence des éléments d'alliage de type nickel, chrome, molybdène ou vanadium ;
- un alliage de tungstène ;
- un alliage de nickel et de cobalt.

Un deuxième objet de l'invention est un procédé de soudage de deux pièces par friction malaxage, à l'aide d'un outil selon le premier objet de l'invention, voir la revendication 9, le procédé comportant les étapes suivantes :
- maintien des pièces l'une contre l'autre, de façon à définir une interface entre les pièces;
- mise en rotation de l'outil et application de l'outil au niveau de l'interface, de telle sorte que le pion pénètre dans les pièces, jusqu'à ce que l'épaulement de l'outil s'applique contre les pièces, en exerçant une pression sur ces dernières;
- translation de l'outil rotatif ainsi disposé, le long de l'interface, de manière à obtenir une soudure entre les pièces par friction malaxage.

Les pièces sont préférentiellement fabriquées à partir d'un alliage d'aluminium qui peut être identique ou différent entre les deux pièces à assembler.

L'outil peut être translaté selon une distance supérieure à 10 m, voire supérieure à 15 mètres ou 20mètres, le long de l'interface entre les pièces. L'épaisseur des pièces est de préférence supérieure à 20 mm ou 25 mm ou même 30 ou 35 ou 40mm, l'épaisseur s'entendant selon l'axe longitudinal. La soudure est préférentiellement effectuée en une seule passe sur toute la longueur de l'interface entre les deux pièces et peut être réalisée, lorsque les pièces à assembler sont particulièrement épaisses, par exemple d'une épaisseur supérieure à 70 mm, sur les deux faces principales des pièces. Dans ce dernier cas, la soudure est alors préférentiellement réalisée en une seule passe le long de l'interface sur chacune des faces principales des pièces à assembler. La soudure peut également être réalisée selon un mode avantageux de l'invention compatible avec les modes précédents à vitesse d'avance V constante ou à vitesse d'avance V pulsée comme décrit en particulier dans le document WO2010/004109.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

Les figures 1A à 1F illustrent une configuration de l'art antérieur. La figure 1A est un schéma d'un outil de soudure. Les figures 1B et 1C illustrent un outil de soudure agissant à l'interface entre deux pièces à souder, sur l'une de leurs faces principales. La figure 1D est une photographie d'un poste de soudure. Les figures 1E et 1F montrent des vues d'un outil de soudure.
Les figures 2A à 2C montrent des photographies d'un outil de l'art antérieur durant un essai expérimental. Les figures 2D et 2E sont des graphes représentant des évolutions temporelles des efforts s'appliquant sur un outil de l'art antérieur, durant un essai expérimental.
La figure 3A schématise respectivement les géométries de la forme d'un outil de soudure selon l'art antérieur, ainsi que selon une première configuration, dite configuration élargie, et selon une deuxième configuration, dite configuration elliptique, cette dernière étant un exemple d'application de l'invention.
La figure 3B est un plan de la forme d'un outil de soudure selon la première configuration. Cet outil de soudure est dit "élargi".
La figure 3C est un plan de la forme d'un outil de soudure selon la deuxième configuration. Cet outil de soudure est dit "elliptique".
La figure 3D schématise une coupe de la forme d'un pion selon l'invention, dans un plan perpendiculaire à l'axe longitudinal selon lequel s'étend le pion.
La figure 3E montre une coupe de la forme d'un pion selon l'invention, dans un plan parallèle à l'axe longitudinal selon lequel s'étend le pion, et passant par l'axe longitudinal.
Les figures 3F et 3G sont deux représentations d'un pion respectivement selon l'art antérieur et selon l'invention.
Les figures 4A, 4B et 4C sont des graphes représentant des évolutions temporelles des efforts, mesurées expérimentalement, et s'appliquant respectivement :
   - à l'outil de soudure élargi, suivant l'insertion du pion dans l'interface entre des pièces à souder;
   - à l'outil de soudure elliptique, suivant l'insertion du pion dans l'interface entre les pièces à souder;
   - à l'outil de soudure elliptique, après avoir parcouru une distance de soudure de 9 mètres.

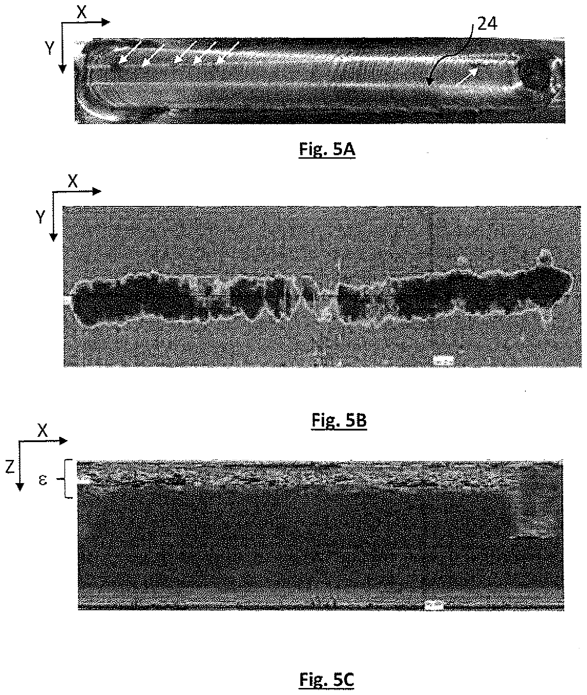

Les figures 5A, 5B et 5C montrent un joint de soudure obtenu en mettant en œuvre l'outil de soudure élargi. La figure 5A est une photographie du joint, tandis que les figures 5B et 5C sont des images résultant d'un contrôle par ultrasons (respectivement C-scan, B-scan).

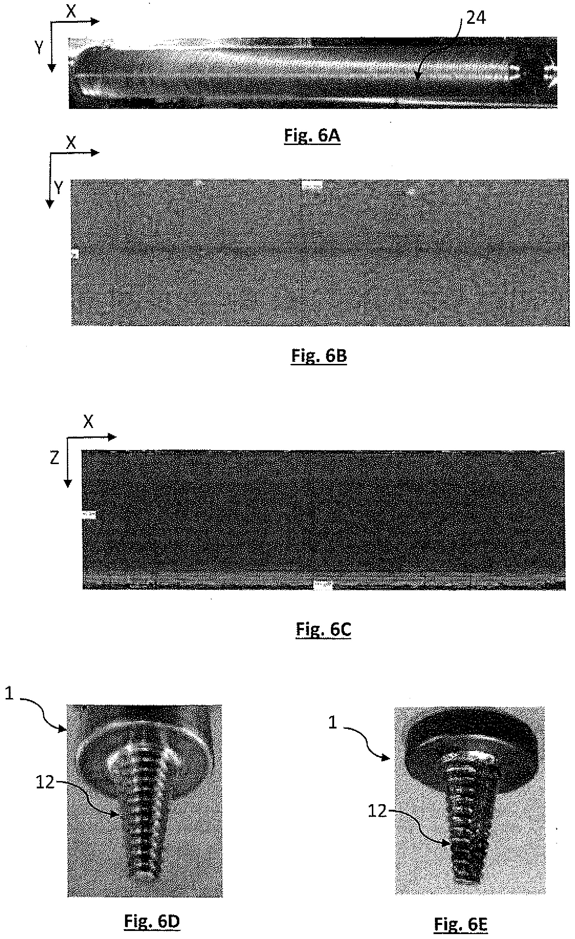

Les figures 6A, 6B et 6C montrent un joint de soudure obtenu en mettant en œuvre l'outil de soudure elliptique. La figure 6A est une photographie du joint, tandis que les figures 6B et 6C sont des images résultant d'un contrôle par ultrasons (respectivement C-scan et B-scan). Les figures 6D et 6E sont des photographies de l'outil de soudure elliptique avant et après la réalisation d'une soudure sur une longueur de 19 mètres.

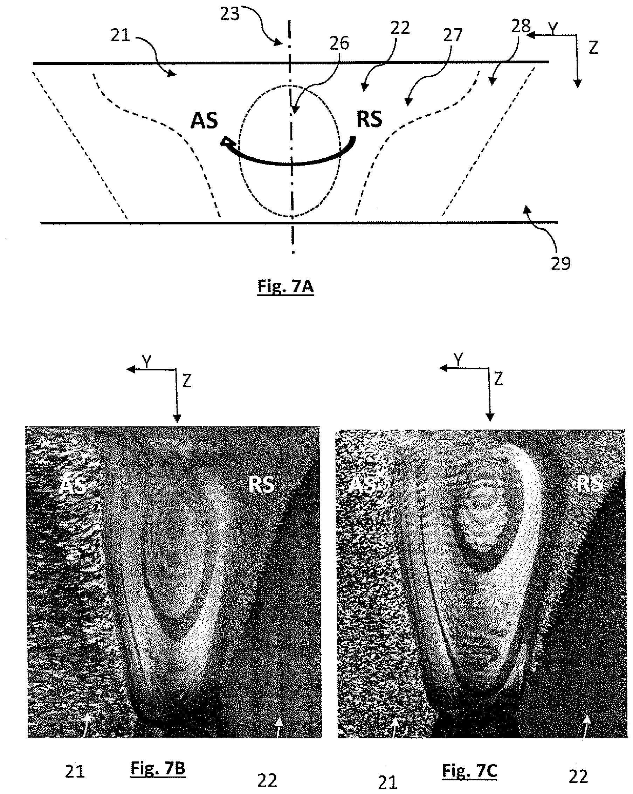

La figure 7A schématise une division de la matière en quatre zones, résultant de l'application d'un soudage par FSW. Les figures 7B et 7C sont des micrographies de coupes d'un composant soudé respectivement avec un outil de l'art antérieur et avec l'outil elliptique.

### EXPOSE DE MODES DE REALISATION PARTICULIERS

Par "un" ou "une", il est entendu "au moins un" ou "au moins une".

Les inventeurs ont souhaité appliquer un soudage par friction malaxage (FSW) pour réaliser des composants d'alliage(s) d'aluminium de grande longueur et/ou de forte épaisseur. Pour cela, ils ont utilisé un poste de soudure de l'art antérieur, tel que représenté sur les figures 1A à 1F. Deux pièces en alliage d'aluminium 21 et 22 en forme de plaque ont été bridées l'une contre l'autre, de manière à définir une interface 23 s'étendant selon une longueur de 16 mètres. La première pièce 21 est réalisée selon un alliage AA2050 et la deuxième pièce 22 est réalisée selon un alliage AA7140. Les alliages AA2050 et AA7140 sont notamment décrits dans le document *Registration Record Series* - *Teal Sheets* - *International Alloy Designations and chemical Compoistion Limits for Wrought Aluminium and Wrought Aluminium Alloys* édité par *The Aluminum Accosiation,* en particulier la version révisée en janvier 2015. L'épaisseur de chaque pièce est de 68 mm. L'épaisseur s'entend selon un axe longitudinal Z, confondu avec l'axe longitudinal Z selon lequel s'étend l'outil de soudure et, plus précisément, le pion de l'outil de soudure.

Les figures 1A, 1B, 1E et 1F montrent la géométrie de l'outil de soudure utilisé, ce dernier comportant un corps cylindrique 10 définissant un épaulement 11, ainsi qu'un pion 12A, comme décrit en lien avec l'art antérieur. Le pion 12A est inscrit dans un tronc conique 14, représentée sur la figure 1E, et s'étendant entre l'épaulement 11 et l'extrémité 13 du pion. La hauteur h du pion correspond à la distance, selon l'axe longitudinal Z, entre l'épaulement 11 et l'extrémité 13. Dans cet exemple, elle s'élève à 35 mm. Elle est généralement comprise entre 20 mm et 50 mm. Les pièces 21 et 22 s'étendent respectivement entre une face principale supérieure plane 21s, 22s et une face principale inférieure plane 21i et 22i. Pour réaliser une soudure selon l'épaisseur des pièces, l'outil de soudure est successivement appliqué sur les faces principales supérieures 21s et 22s, comme représenté sur la figure 1B, pour réaliser une première soudure. Il est ensuite appliqué sur les faces principales inférieures 21i et 22i pour réaliser une deuxième soudure. Les faces principales supérieures et inférieures s'étendent perpendiculairement à l'axe longitudinal Z. Au cours du soudage, les pièces 21 et 22 reposent sur une enclume 25.

Le matériau du corps cylindrique 10 est un acier à outil de type H13 selon la classification AISI (American Iron and Steel Institute). Le matériau du pion est un alliage de cobalt et de nickel de type MP159 (marque déposée). La composition nominale de cet alliage est : Co : 35,7 % (fraction massique) ;Ni : 25,5 % ; Cr : 19 % ; Mo : 7 % ; Ti : 3 % ; Cb : 0.6 % ; Al : 0,2 %. Le pion 12A est structuré par une rainure, formant un filet 18, ménagé le long de sa surface externe, un tel filet étant représenté sur la figure 1E. Le filet permet d'améliorer le déplacement de la matière ramollie, au voisinage du pion, vers l'extrémité 13 de ce dernier. Un méplat 19 peut également être ménagé le long de la surface externe. Dans l'exemple représenté, le pion comporte trois méplats 19 décalés angulairement de 120°. En général, la profondeur du filet ou du méplat est inférieure à 5 mm, en étant par exemple comprise entre 1 mm et 2 mm.

Sur la figure 1E, l'épaulement 11 s'étend selon un plan P, perpendiculaire à l'axe longitudinal Z selon lequel s'étend le pion 12A. On a représenté, sur la figure 1F, une variante selon laquelle l'épaulement 11 s'étend sensiblement selon le plan P, le terme sensiblement désignant le fait que l'épaulement peut être incurvé par rapport au plan P, selon une plage angulaire de ± 10° ou ± 5°.

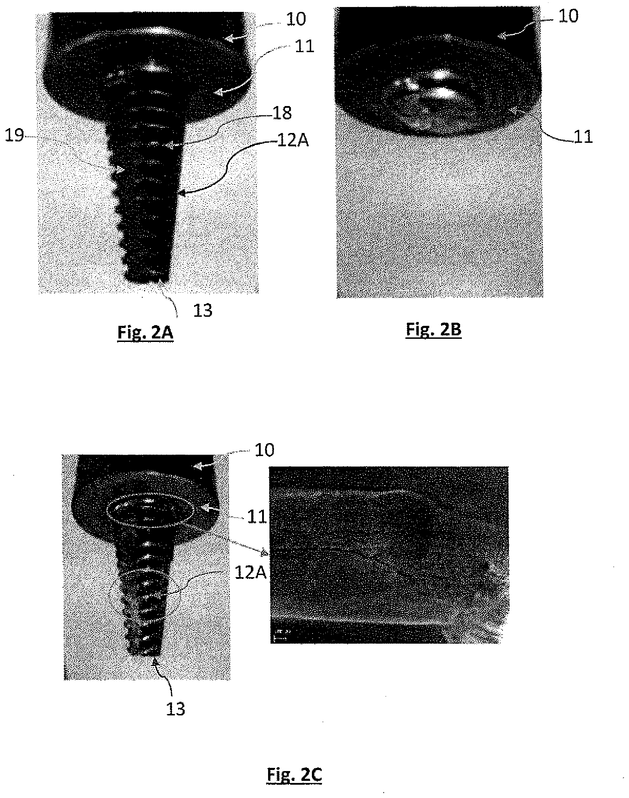

Des essais expérimentaux ont été menés en utilisant le poste de soudure tel que représenté sur la figure 1D, les vitesses de rotation R et d'avance V de l'outil de soudure 10 étant respectivement entre 180 et 220 tours par minute et 40 et 60 mm/min (vitesse d'avance moyenne). L'outil utilisé est photographié sur la figure 2A. On a identifié, sur cette figure, le filet 18 et un méplat 19 décrits en lien avec la figure 1E.

Les inventeurs ont constaté que l'outil de soudure de l'art antérieur n'est pas adapté à la réalisation d'une soudure selon une grande longueur. En effet, après avoir effectué une soudure selon une longueur de 12 mètres, l'outil de soudure s'est cassé, au niveau d'une base du pion 12A, correspondant à la jonction entre le pion 12A et l'épaulement 11. L'outil de soudure est représenté, après la soudure, sur la figure 2B. La figure 2C représente un outil de soudure de même type, après avoir effectué une soudure, dans des conditions analogues, selon une longueur de 5 mètres. Des fissures apparaissent au niveau de la base du pion, à proximité de l'épaulement. Ces observations montrent que l'outil de soudure de l'art antérieur ne convient pas à la réalisation d'une soudure dès lors que la longueur des pièces à souder dépasse 10 mètres.

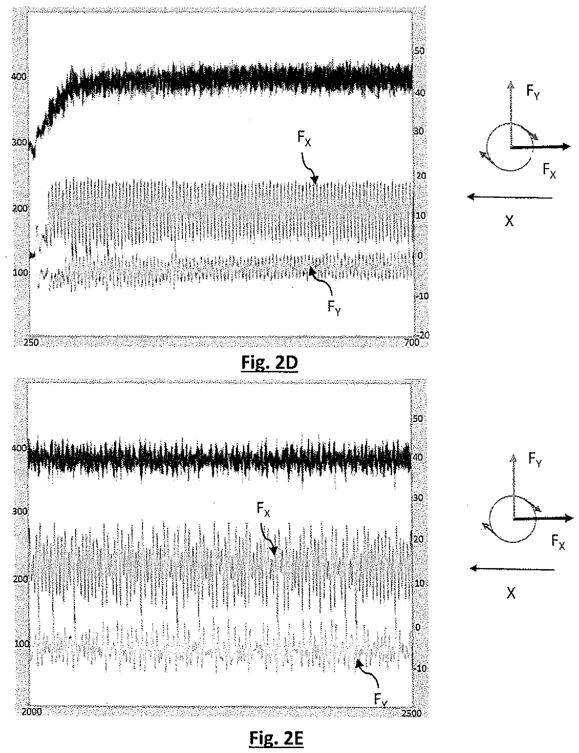

Durant la réalisation de la soudure, l'outil de soudure est soumis à des contraintes mécaniques importantes selon l'axe de translation, ou axe d'avance X, ainsi que selon l'axe Y perpendiculaire à l'axe de translation. Des capteurs de force ont été disposés sur le support 2 maintenant l'outil de soudure, de façon à mesurer les contraintes s'exerçant sur ce dernier selon l'axe -X, opposé à l'axe translation X, selon l'axe Y, ainsi que la résistance à la rotation. Les figures 2D et 2E montrent une évolution temporelle des forces Fx et Fy, respectivement mesurées selon les axes -X et Y, ainsi que la contrainte en rotation. Sur chacune de ces figures, l'axe des abscisses représente le temps, exprimé en secondes, tandis que l'axe des ordonnées représente l'intensité des forces Fx et Fy (échelle de droite, exprimée en N) et la contrainte en rotation (exprimée en Nm, échelle de gauche). La figure 2D représente les mesures entre l'insertion du pion, correspondant à l'abscisse t=250, jusqu'à l'abscisse t=700, ce qui correspond à un intervalle temporel de 450 secondes. Les contraintes s'exerçant selon l'axe X, s'opposant au sens d'avance X, sont plus importantes que celles s'exerçant selon l'axe Y, perpendiculairement à la direction d'avance, ce qui était attendu. La figure 2E représente les mesures entre les abscisses t = 2250s et t = 2700s, c'est-à-dire après une distance d'environ 9 mètres parcourue par le pion. On observe que les signaux correspondant à la force Fx, s'exerçant à l'opposé de la direction de translation X, présentent des fluctuations importantes, témoignant d'une dégradation de l'outil de soudure. On observe également d'importantes fluctuations affectant les forces s'exerçant selon l'axe Y.

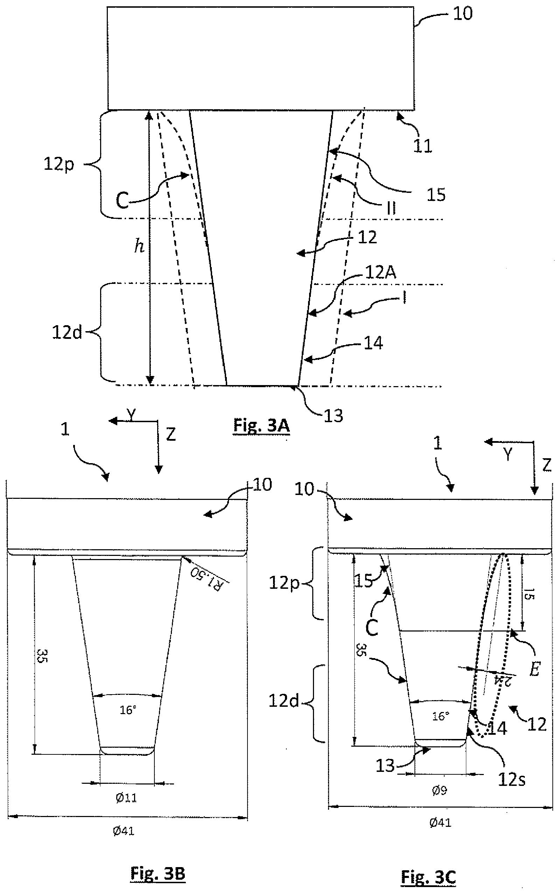

Les inventeurs attribuent la rupture de l'outil de soudure à la fatigue résultant de la rotation. Afin de rendre l'outil de soudure compatible avec une utilisation sur des distances importantes, typiquement supérieures à 15m, les inventeurs ont modifié la forme du pion, deux options ayant été envisagées. La figure 3A représente la forme du pion 12A selon l'art antérieur, ainsi qu'une première configuration, dite configuration élargie, selon laquelle le pion 12 est plus large que dans l'art antérieur (courbe I). On entend par forme d'un outil de soudure l'enveloppe dudit outil qui ne tient pas compte des éventuels méplats et/ou filetages. Selon la configuration élargie, le diamètre du pion est augmenté de 2 mm, de façon uniforme, de façon à renforcer sa tenue mécanique. Selon cette configuration, la géométrie du pion est conique, dans la mesure où le pion est inscrit dans une surface conique entre l'épaulement 11 et l'extrémité 13.

La figure 3A représente également une deuxième configuration (courbe II), dite configuration elliptique. Selon cette configuration, le diamètre du pion 12 est augmenté, par rapport à la configuration de l'art antérieur, uniquement dans une partie, dite partie proximale 12p, du pion. La partie proximale du pion correspond à la partie du pion s'étendant entre l'épaulement 11 et une limite située à au moins 10%, et avantageusement 20% de la hauteur h du pion, et de préférence à au moins 25% de la hauteur *h* du pion ou à au moins 33% de la hauteur *h* du pion. La partie proximale 12p peut s'étendre jusqu'à 50% de la hauteur h du pion, voire jusqu'à 75% de la hauteur h du pion ou plus. De préférence, la partie proximale 12p s'étend entre 25% et 50% de la hauteur h du pion. Le pion comporte une partie distale 12d, s'étendant à partir de l'extrémité 13, vers l'épaulement 11. La partie distale s'étend selon au moins 1%, de la hauteur *h* du pion Avantageusement, la partie distale 12d s'étend jusqu'à 2% de la hauteur du pion *(h),* ou jusqu'à 5% de la hauteur du pion, ou jusqu'à 10% de la hauteur du pion.

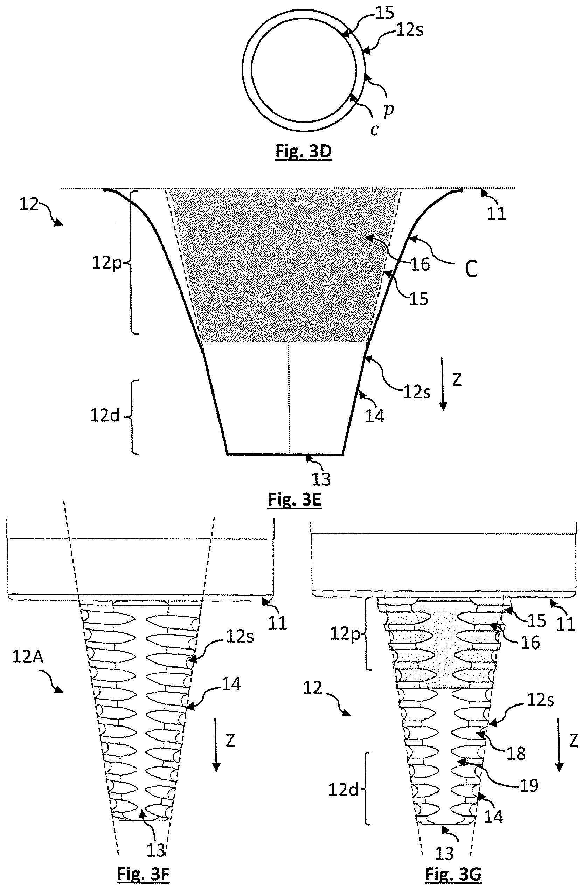

Selon la deuxième configuration, le pion 12 s'étend, dans la partie distale 12d, en étant inscrit dans un tronc conique 14, de façon similaire à l'art antérieur. Le tronc conique 14 définit une surface tronconique 15, dite surface de prolongement, prolongeant le tronc conique 14 jusqu'à l'épaulement 11, c'est-à-dire jusqu'au corps 10. Dans la partie proximale 12p, la surface de prolongement 15 délimite un volume tronconique 16. Dans la partie proximale 12p, le volume du pion s'étend au-delà du volume tronconique 16. Ainsi, dans la partie proximale 12p, le pion s'élargit, de préférence progressivement, de telle sorte que sa surface externe 12s est située à l'extérieur du volume tronconique 16 et suit une courbe C. Le volume tronconique 16 est représenté en grisé sur les figures 3E et 3G.

La figure 3B est un plan du pion de la première configuration testée (outil de soudure dit "élargi"). Le pion prend une forme inscrite dans une enveloppe conique, et s'élargit au voisinage de l'épaulement 11, selon un arc de cercle de rayon de courbure 1,5 mm. Ainsi, hormis dans les premiers 1,5 mm à partir de l'épaulement 11, le pion est inscrit dans une surface conique. Dans cet exemple, la surface conique s'étend en formant un demi-angle au sommet de 8°. Le diamètre du pion, à son extrémité 13, est de 11 mm, ce dernier étant de 9 mm dans la configuration de l'art antérieur.

La figure 3C est un plan du pion selon la deuxième configuration testée, cette configuration correspondant à un exemple de mise en œuvre de l'invention (outil de soudure dit "elliptique"). Le diamètre du pion, dans la partie distale 12d, correspond au diamètre du pion de l'art antérieur. Au niveau de l'extrémité 13, le diamètre du pion atteint 9 mm. Selon cette configuration, le pion est plus large que le pion de l'art antérieur uniquement dans la partie proximale 12p. Dans la partie proximale 12p, selon un plan médian, parallèle à l'axe longitudinal Z et passant par l'axe longitudinal, la surface externe 12s est inscrite selon une courbe C qui prend un profil elliptique. Ce profil décrit une partie d'une ellipse E dont le grand axe est égal à 15 mm et dont le petit axe est de 2,4 mm. L'ellipse E est représentée sur la figure 3C, en pointillés. Dans cet exemple, la partie proximale 12p s'étend selon une distance de 15 mm, à partir de l'épaulement 11, tandis que la hauteur du pion s'élève à 35 mm. La partie proximale s'étend ainsi selon environ 40% de la hauteur h du pion. Ainsi, dans la partie distale 12d, la surface externe 12s du pion est inscrite dans un tronc conique 14, d'équation *x*² + *y*² = *z*²(tan *α*)²*,* où *x, y* et z sont des coordonnées respectivement selon les axes X, Y et Z et α est le demi-angle au sommet du tronc conique 14, en l'occurrence 8°. Dans la partie proximale 12p, la surface externe 12s décrit une équation de type *x*² + *y*² = *k*(*x, y, z*)²*,* avec *k*(*x, y, z*)² *> z*²(tan *α*)²*. k*(*x, y, z*) est une fonction scalaire, décrivant l'évolution de la surface externe 12s dans la partie proximale 12p.

Conformément à l'invention, l'ellipse E est tangente à la surface de prolongement 15 de façon à améliorer l'écoulement de matière autour du pion. La surface d'intersection entre l'ellipse E et la surface de prolongement décrit de préférence un cercle, situé dans un plan perpendiculaire à l'axe longitudinal Z. La surface d'intersection peut délimiter la partie distale et la partie proximale.

De manière préférée, l'ellipse E est tangente à l'épaulement 11. De manière préférée, l'ellipse E est tangente à la surface de prolongement 15 et à l'épaulement 11.

Dans les deux configurations respectivement représentées sur les figures 3B et 3C, le diamètre du pion, au niveau de l'épaulement 11, est de 24 mm.

Si l'on se place dans un plan de coupe perpendiculaire à l'axe longitudinal Z, la surface de prolongement 15 décrit, dans la partie proximale 12p, un contour circulaire c. La surface externe 12s du pion 12 décrit, dans le plan de coupe, un périmètre *p* contenant le contour circulaire c. Autrement dit, selon un plan de coupe perpendiculaire à l'axe transversal Z, dans la partie proximale 12p, le contour circulaire c de la surface de prolongement 15 est inclus dans le périmètre *p* du pion 12. C'est ce qui est représenté sur la figure 3D.

Comme on peut le voir sur les figures 3E et 3G, dans la partie proximale 12p, le pion est plus large que le volume tronconique 16 défini par la surface de prolongement 15. D'une façon générale, dans la partie proximale 12p, la surface externe 12s du pion 12 est de plus grand diamètre que la surface de prolongement 15. Comme représenté sur la figure 3E, la surface externe 12s est inscrite dans une enveloppe décrivant, dans un plan parallèle à l'axe longitudinal Z, et passant par ce dernier :
- dans la partie proximale 12p, un profil suivant une courbe C, partie d'une ellipse ou d'une hyperbole ou d'une parabole ;
- dans la partie distale 12d, un profil suivant un tronc conique 14.

Conformément à l'invention, le profil suivant une partie d'une ellipse ou d'une hyperbole ou d'une parabole est tangent à la surface de prolongement 15. De manière préférée, le profil suivant une partie d'une ellipse ou d'une hyperbole ou d'une parabole est tangent à l'épaulement 11.

Sur la figure 3E, on a également représenté la surface de prolongement 15, prolongeant le tronc conique 14 dans lequel est inscrit le pion dans la partie distale 12d. On a également représenté le volume tronconique 16, délimité par la surface de prolongement 15. Dans la partie proximale 12p, le pion 12 englobe le volume tronconique 16 et s'étend au-delà de ce dernier.

De préférence, le pion 12 est symétrique par rapport à l'axe longitudinal Z.

L'élargissement progressif du pion, entre la partie distale 12d et l'épaulement 11, permet de maintenir une partie distale 12d relativement fine, tout en renforçant le pion 12 au niveau de la partie proximale 12p. Les figures 3F et 3G illustrent un pion respectivement selon l'art antérieur et selon l'invention. Sur la figure 3F, la surface externe du pion 12A est inscrite dans un tronc conique 14, représenté en pointillés. Sur la figure 3G, dans la partie distale 12d, la surface externe 12s du pion est inscrite dans un tronc conique. Le tronc conique 14 se prolonge, dans la partie proximale 12p, par la surface de prolongement 15. On a représenté un volume tronconique 16, délimité par la surface de prolongement 15. Dans la partie proximale 12p, le pion 12 s'étend au-delà du volume tronconique 16.

Quelle que soit la configuration, un filet 18 et/ou un méplat 19 peut être ménagé dans la surface externe du pion, de façon à guider la matière malaxée vers l'extrémité 13, comme précédemment décrit en lien avec le pion de l'art antérieur 12A.

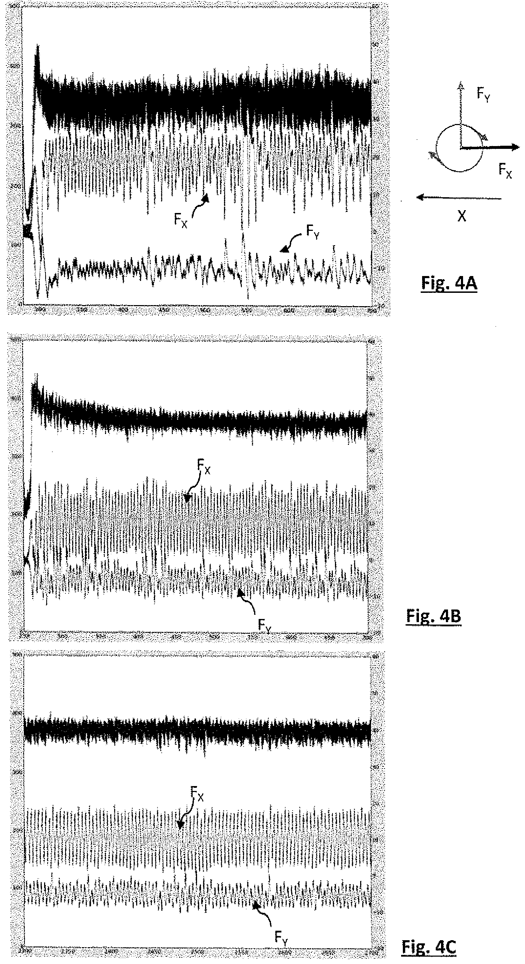

Les deux configurations représentées sur les figures 3B et 3C ont été testées, selon des conditions expérimentales analogues à celles précédemment décrites, en lien avec le soudage de deux pièces d'aluminium 21 et 22 en forme de plaque d'épaisseur 68 mm. La figure 4A représente l'évolution temporelle des forces mesurées selon l'axe de translation X, selon l'axe Y ainsi que l'effort en rotation, en utilisant l'outil selon la première configuration, dite configuration "élargie". Les axes et unités sont analogues à ceux décrits en lien avec les figures 2D et 2E. Sur la figure 4A, l'insertion du pion correspond à l'abscisse t = 300 s. Les figures 4B et 4C sont similaires à la figure 4A et ont été obtenues en mettant en œuvre la deuxième configuration "elliptique". La figure 4B correspond à un intervalle temporel compris entre l'insertion du pion (abscisse t = 250 s) et l'abscisse t = 700 s. La figure 4C correspond à un intervalle temporel compris entre l'abscisse t = 2300 s et l'abscisse x = 2700 s, la distance parcourue par l'outil de soudure étant alors d'environ 9 mètres.

La comparaison entre les figures 4A et 4B montre qu'en mettant en œuvre la première configuration, les fluctuations sont plus importantes qu'en mettant en œuvre la deuxième configuration et cela quelle que soit l'effort examiné. Par ailleurs, la figure 4C, montre qu'après avoir effectué une soudure selon une distance importante, en l'occurrence 9 m, le comportement de l'outil de soudure, selon la deuxième configuration, est stable : les fluctuations des signaux mesurées sont comparables à celles observées sur mesures réalisées lorsque la distance parcourue est faible, cf. figure 4B. La comparaison de la figure 4C avec la figure 2E montre qu'avec la deuxième configuration, les signaux mesurés, représentatifs des forces exercées sur l'outil de soudure, sont plus stables. Ainsi, les paramètres de soudure sont stables, selon une grande longueur.

La deuxième configuration a été mise en œuvre pour réaliser une soudure de plaques 21 et 22, telles que précédemment décrites, selon une longueur de 16 mètres, sans casser le pion 12 de l'outil de soudure. Durant un autre essai, la longueur de soudure a atteint 19 mètres.

Les figures 5A et 6A montrent l'aspect du joint de soudure 24 obtenu en mettant respectivement en œuvre la première configuration et la deuxième configuration, la longueur de la soudure s'élevant ici à 350 mm. Le joint de soudure obtenu en mettant en œuvre la première configuration présente des défauts, apparaissant sous la forme de traces noires, repérées par des flèches blanches sur la figure 5A. Sur la figure 6A, on observe que le joint de soudure résultant de la deuxième configuration est plus net.

Les figures 5B et 5C sont des résultats d'un contrôle structurel non destructif par ultrasons, mis en œuvre respectivement selon un plan transversal XY, en dessus du joint de soudure 24 formé lors de la mise en œuvre de la première configuration, et selon une coupe XZ, passant par l'axe d'insertion du pion. Les figures 5B et 5C font apparaître des hétérogénéités, témoignant de la présence de porosités dans la matière soudée, notamment dans une plage d'épaisseur ε d'environ 1 cm à partir de la surface des pièces soudées. Une telle porosité n'est pas acceptable notamment dans les pièces soudées utilisées dans l'industrie aéronautique. Les figures 6B et 6C sont analogues aux figures 5B et 5C respectivement et correspondent à des contrôles par ultrasons sur le joint de soudure 24 résultant d'une mise en œuvre de la deuxième configuration et représenté sur la figure 6A. Les porosités observées sur les figures 5B et 5C ne sont pas présentes, ou de façon nettement moins importante, sur les figures 6B et 6C. En mettant en œuvre un pion selon la deuxième configuration, la soudure est plus homogène et présente nettement moins de porosités que selon le pion de l'art antérieur.

Les figures 6D et 6E montrent respectivement le pion 12 d'un outil de soudure selon la deuxième configuration, après une soudure réalisée selon une longueur de 16 m. Bien que des traces d'usure apparaissent sur le filet 18 ménagé dans la surface externe 12s du pion, l'intégrité de ce dernier est préservée.

La figure 7A illustre une division de la matière soudée en quatre zones distinctes. Au niveau de l'interface 23, une zone centrale 26, dite noyau, correspond notamment à la zone occupée par le pion 12 lors de la soudure, ainsi que la zone immédiatement adjacente du pion. C'est dans cette partie que les déformations plastiques sont les plus importantes et que la température est la plus élevée. Le noyau 26 est entouré d'une zone 27, dite zone affectée thermo-mécaniquement, dans laquelle la déformation plastique est modérée. Au voisinage de la zone affectée thermo-mécaniquement s'étend une zone, dite zone affectée thermiquement 28, dans laquelle les propriétés de la matière ne sont affectées que par l'élévation de température. Cette zone est délimitée par une zone 29 comportant la matière de base, non déformée et non modifiée par l'élévation de température. La figure 7A correspond à une coupe selon le plan YZ, la translation du pion étant réalisée selon l'axe X. Selon le plan XY, deux côtés distincts sont définis en fonction du sens de rotation du pion. Le côté avance AS est le côté où le sens local de la surface de l'outil dû à la rotation de l'outil et le sens de soudage sont identiques, la pièce 21 est située côté avance. Le côté retrait est le côté où le sens local de la surface de l'outil dû à la rotation de l'outil et le sens de soudage sont opposés, la pièce 22 est située côté retrait.Les figures 7B et 7C sont des micrographies réalisées sur des coupes de composants soudés respectivement en utilisant un outil de l'art antérieur et un outil disposant d'un pion selon la deuxième configuration testée. On remarque que l'outil de soudure selon l'invention (cf. figure 7C) permet d'obtenir une répartition plus homogène de la matière. Ces figures mettent en évidence un écoulement de la matière plus homogène le long de l'outil, plus particulièrement dans la zone proche de l'épaulement du côté avance AS. Les propriétés mécaniques du joint de soudure 24 sont donc améliorées.

Les performances du pion selon la deuxième configuration, conforme à la présente invention, sont améliorées par rapport au pion de l'art antérieur :
- la robustesse est accrue, ce qui permet d'effectuer une soudure selon une grande longueur, typiquement supérieure à 10 m,15 m ou même 20 m, l'épaisseur étant supérieure à 20 mm,25 mm ou même 30, 35 ou encore 40 mm.
- l'élargissement progressif, au niveau de la partie proximale, permet de stabiliser les contraintes mécaniques le long de la soudure, conduisant à l'obtention d'un joint de soudure plus homogène.

Le matériau formant l'outil de soudure est compatible avec une utilisation à haute température. On pourra se reporter à la publication Rai R "Review : friction stir welding tools", Science and Technology of Welding and joining, 2011, vol.16 N° 4 325-342 pour sélectionner les matériaux potentiellement utilisables. Il peut notamment s'agir :
- d'acier trempé, de type acier à outil, présentant de préférence des éléments d'alliage de type nickel ou chrome ou molybdène ou vanadium ;
- d'alliages de tungstène ;
- d'alliages de nickel et de cobalt.

L'invention s'appliquera à la fabrication de composants de grande longueur, par exemple des composants en alliages d'aluminium destinés à l'industrie aéronautique, et notamment des composants pour la fabrication d'ailes ou de fuselages.

## Revendications

1. Outil (1), destiné à un poste de soudure par friction malaxage, l'outil étant apte à être mobile en rotation et comportant :
- un corps (10), définissant une surface transversale, formant un épaulement (11);
- un pion (12), s'étendant, depuis l'épaulement (11), selon un axe longitudinal (Z), vers une extrémité (13), le pion (12) s'affinant entre l'épaulement (11) et l'extrémité, la distance entre l'extrémité (13) et l'épaulement (11) correspondant à une hauteur du pion (h);
le pion (12) comportant :
- une partie proximale (12p), adjacente de l'épaulement (11) et s'étendant, à partir de l'épaulement (11), vers l'extrémité (13), selon au moins 20% de la hauteur du pion (h);
- une partie distale (12d), adjacente de l'extrémité (13) et s'étendant, à partir de l'extrémité (13), vers l'épaulement (11), selon au moins 1% de la hauteur du pion (h), la partie distale étant inscrite dans un tronc conique (14), le tronc conique (14) définissant une surface, dite surface de prolongement (15), prolongeant le tronc conique (14) jusqu'à l'épaulement (11), la surface de prolongement délimitant un volume tronconique (16);
- dans la partie proximale (12p), le pion s'étend à l'extérieur du volume tronconique (16) délimité par la surface de prolongement (15),le pion (12) décrit une surface externe (12s) inscrite dans une enveloppe décrivant, dans un plan parallèle à l'axe longitudinal (Z) et passant par ce dernier,
**caractérisé en ce que**
- dans la partie proximale (12p), un profil suivant une courbe (C) et tel que la courbe (C) est tangente à la surface de prolongement (15)
- et la surface transversale est de forme plane ou incurvée par rapport à un plan transversal et la courbe (C) est une partie d'une ellipse ou d'une hyperbole ou d'une parabole.

2. Outil selon la revendication 1 dans lequel, le profil de la courbe (C) est tangent à l'épaulement 11.

3. Outil selon l'une quelconque des revendications précédentes, dans lequel la partie proximale (12p) s'étend jusqu'à 25% de la hauteur du pion (h), ou jusqu'à 33% de la hauteur du pion, ou jusqu'à 50% de la hauteur du pion.

4. Outil selon l'une quelconque des revendications précédentes, dans lequel la partie distale (12d) s'étend jusqu'à 2% de la hauteur du pion (h), ou jusqu'à 5% de la hauteur du pion, ou jusqu'à 10% de la hauteur du pion.

5. Outil selon l'une quelconque des revendications précédentes, dans lequel des rainures (18) sont ménagées sur le pion pour former un filet formant tout ou partie d'une hélice spirale s'étendant entre l'extrémité (13) et l'épaulement (11).

6. Outil selon l'une quelconque des revendications précédentes, dans lequel au moins un méplat (19) est ménagé sur le pion, le méplat s'étendant entre l'extrémité (13) et l'épaulement (11).

7. Outil selon l'une quelconque des revendications précédentes, configuré pour être disposé sur un support (2) de manière à être mobile en rotation par rapport à ce dernier, le support et l'outil formant une tête de soudage.

8. Outil selon l'une quelconque des revendications précédentes, dans lequel le pion (12) et/ou le corps (10) sont constitués d'un matériau compatible avec une utilisation à haute température, et de préférence un matériau choisi parmi :
- un acier trempé, de type acier à outil, présentant de préférence des éléments d'alliage de type nickel ou chrome ou molybdène ou vanadium ;
- et/ou un alliage de tungstène ;
- et/ou un alliage de nickel et de cobalt.

9. Procédé de soudage de deux pièces (21, 22) par friction malaxage, à l'aide d'un outil (1) objet de l'une quelconque des revendications précédentes, le procédé comportant les étapes suivantes :
- maintien des pièces l'une contre l'autre, de façon à définir une interface (23) entre les pièces;
- mise en rotation de l'outil et application de l'outil au niveau de l'interface, de telle sorte que le pion (12) pénètre dans les pièces (21, 22), jusqu'à ce que l'épaulement (11) de l'outil s'applique contre les pièces, en exerçant une pression sur ces dernières;
- translation de l'outil rotatif ainsi disposé, le long de l'interface (23), de manière à obtenir une soudure entre les pièces par friction malaxage.

10. Procédé selon la revendication 9 dans lequel chacune des pièces est formée d'un alliage d'aluminium.

11. Procédé selon la revendication 9 ou la revendication 10, dans lequel l'outil est translaté selon une distance supérieure à 10 m, voire supérieure à 12 mètres ou 15 mètres, le long de l'interface (23) entre les pièces.

12. Procédé selon l'une quelconque des revendications 9 à 11, l'épaisseur des pièces étant supérieure à 25 mm, préférentiellement 30 mm, plus préférentiellement encore 40 mm, l'épaisseur s'entendant selon l'axe longitudinal (Z).

## Patentansprüche

1. Werkzeug (1) für ein Rührreibschweißgerät, wobei das Werkzeug drehbeweglich ist und umfasst:
- einen Körper (10), der eine Querschnittsfläche definiert, die eine Schulter (11) bildet;
- einen Stift (12), der sich von der Schulter (11) entlang einer Längsachse (Z) zu einem Ende (13) erstreckt, wobei sich der Stift (12) zwischen der Schulter (11) und dem Ende verjüngt, wobei der Abstand zwischen dem Ende (13) und der Schulter (11) einer Stifthöhe (h) entspricht;
wobei der Stift (12) umfasst:
- einen proximalen Abschnitt (12p), der an die Schulter (11) angrenzt und sich von der Schulter (11) zum Ende (13) über mindestens 20% der Stifthöhe (h) erstreckt;
- einen distalen Abschnitt (12d), der an das Ende (13) angrenzt und sich von dem Ende (13) zur Schulter (11) über mindestens 1 % der Stifthöhe (h) erstreckt, wobei der distale Abschnitt in einem Kegelstumpf (14) angeordnet ist, wobei der Kegelstumpf (14) eine Fläche definiert, die so genannte Verlängerungsfläche (15), die den Kegelstumpf (14) bis zur Schulter (11) verlängert, wobei die Verlängerungsfläche ein kegelstumpfförmiges Volumen (16) abgrenzt;
- im proximalen Abschnitt (12p) erstreckt sich der Stift (12) außerhalb des durch die Verlängerungsfläche (15) abgegrenzten kegelstumpfförmigen Volumens (16), und der Stift (12) beschreibt eine Außenfläche (12s), die in eine Umhüllende eingeschrieben ist, die in einer Ebene parallel zur Längsachse (Z) und durch diese hindurch verlaufend,
**dadurch gekennzeichnet, dass**
- im proximalen Abschnitt (12p), ein Profil beschreibt, das einer Kurve (C) folgt und so ausgebildet ist, dass die Kurve (C) tangential zur Verlängerungsfläche (15) ist,
- und die Querschnittsfläche eine ebene oder gekrümmte Form in Bezug auf eine Querebene hat und die Kurve (C) ein Teil einer Ellipse oder einer Hyperbel oder einer Parabel ist.

2. Werkzeug nach Anspruch 1, bei dem das Profil der Kurve (C) tangential zur Schulter (11) ist.

3. Werkzeug nach irgendeinem der vorhergehenden Ansprüche, bei dem sich der proximale Abschnitt (12p) bis zu 25 % der Stifthöhe (h) oder bis zu 33 % der Stifthöhe oder bis zu 50 % der Stifthöhe erstreckt.

4. Werkzeug nach irgendeinem der vorhergehenden Ansprüche, bei dem sich der distale Abschnitt (12d) bis zu 2% der Stifthöhe (h) oder bis zu 5% der Stifthöhe oder bis zu 10% der Stifthöhe erstreckt.

5. Werkzeug nach irgendeinem der vorhergehenden Ansprüche, bei dem Nuten (18) auf dem Stift ausgebildet sind, um ein Gewinde zu bilden, das gänzlich oder teilweise eine Spiralwendel bildet, die sich zwischen dem Ende (13) und der Schulter (11) erstreckt.

6. Werkzeug nach irgendeinem der vorhergehenden Ansprüche, bei dem mindestens eine Abflachung (19) auf dem Stift ausgebildet ist, wobei sich die Abflachung zwischen dem Ende (13) und der Schulter (11) erstreckt.

7. Werkzeug nach irgendeinem der vorhergehenden Ansprüche, das zur Anordnung auf einem Träger (2) so ausgestaltet ist, dass es relativ zu diesem drehbeweglich ist, wobei der Träger und das Werkzeug einen Schweißkopf bilden.

8. Werkzeug nach irgendeinem der vorhergehenden Ansprüche, bei dem der Stift (12) und/oder der Körper (10) aus einem Material bestehen, das mit einem Einsatz bei hohen Temperaturen kompatibel ist, und vorzugsweise aus einem Material, das ausgewählt ist aus:
- einem gehärteten Stahl vom Typ Werkzeugstahl, der vorzugsweise Legierungselemente vom Typ Nickel oder Chrom oder Molybdän oder Vanadium aufweist;
- und/oder einer Wolframlegierung;
- und/oder einer Nickel- und Kobaltlegierung.

9. Verfahren zum Reibrührschweißen von zwei Teilen (21, 22) unter Verwendung eines Werkzeugs (1), das Gegenstand eines der vorhergehenden Ansprüche ist, wobei das Verfahren die folgenden Schritte umfasst:
- die Teile gegeneinander halten, um eine Grenzfläche (23) zwischen den Werkstücken zu definieren;
- das Werkzeug in Drehung bringen und an der Grenzfläche ansetzen, so dass der Stift (12) in die Teile (21, 22) eindringt, bis die Schulter (11) des Werkzeugs an den Teilen anliegt und Druck auf diese ausübt;
- das so angeordnete rotierende Werkzeug entlang der Grenzfläche (23) verfahren, um eine Schweißnaht zwischen den Teilen durch Reibrührschweißen zu erhalten.

10. Verfahren nach Anspruch 9, bei dem jedes der Teile aus einer Aluminiumlegierung besteht.

11. Verfahren nach Anspruch 9 oder 10, bei dem das Werkzeug in einem Abstand von mehr als 10 m oder sogar mehr als 12 m oder 15 m entlang der Grenzfläche (23) zwischen den Teilen verfahren wird.

12. Verfahren nach irgendeinem der Ansprüche 9 bis 11, wobei die Dicke der Teile mehr als 25 mm, bevorzugt 30 mm, noch bevorzugter 40 mm beträgt, wobei die Dicke entlang der Längsachse (Z) gemeint ist.

## Claims

1. A tool (1), intended for a friction stir welding station, the tool being capable of being rotated and comprising:
- a body (10), defining a transverse surface, forming a shoulder (11);
- a pin (12), extending, from the shoulder (11), along a longitudinal axis (Z), to an end (13), the pin (12) becoming slimmer between the shoulder (11) and the end, the distance between the end (13) and the shoulder (11) corresponding to a height of the pin (h);
the pin (12) including:
- a proximal portion (12p), adjacent to the shoulder (11) and extending, from the shoulder (11), to the end (13), over at least 20% of the height of the pin (h);
- a distal portion (12d), adjacent to the end (13) and extending, from the end (13), to the shoulder (11), over at least 1% of the height of the pin (h), the distal portion being inscribed in a cone frustum (14), the cone frustum (14) defining a surface, called the extension surface (15), extending the cone frustum (14) to the shoulder (11), the extension surface delimiting a frustoconical volume (16);
- in the proximal portion (12p), the pin extends to the outside of the frustoconical volume (16) delimited by the extension surface (15), the pin (12) describes an outer surface (12s) inscribed in an envelope describing, in a plane parallel to the longitudinal axis (Z) and passing through the latter,
**characterised in that**
- in the proximal portion (12p), a profile following a curve (C) and such that the curve (C) is tangent to the extension surface (15)
- and the transverse surface is flat or curved in shape relative to a transverse plane and the curve (C) is a portion of an ellipse or a hyperbola or a parabola.

2. The tool according to claim 1 wherein the profile of the curve (C) is tangent to the shoulder 11.

3. The tool according to any one of the preceding claims, wherein the proximal portion (12p) extends over 25% of the height of the pin (h), or over 33% of the height of the pin, or over 50% of the height of the pin.

4. The tool according to any one of the preceding claims, wherein the distal portion (12d) extends over 2% of the height of the pin (h), or over 5% of the height of the pin, or over 10% of the height of the pin.

5. The tool according to any one of the preceding claims, wherein grooves (18) are formed on the pin to form a thread forming all or part of a spiral helix extending between the end (13) and the shoulder (11).

6. The tool according to any one of the preceding claims, wherein at least one flat section (19) is provided on the pin, the flat section extending between the end (13) and the shoulder (11).

7. The tool according to any one of the preceding claims, configured to be disposed on a support (2) so as to be rotated relative to the latter, the support and the tool forming a welding head.

8. The tool according to any one of the preceding claims, wherein the pin (12) and/or the body (10) consist of a material compatible with a high temperature use, and preferably a material selected from:
- a hardened steel, of the tool steel type, preferably having alloy elements of the nickel or chromium or molybdenum or vanadium type;
- and/or a tungsten alloy;
- and/or a nickel and cobalt alloy.

9. A method for welding two parts (21, 22) by friction stir, using a tool (1) object of any one of the preceding claims, the method including the following steps:
- holding the parts together so as to define an interface (23) between the parts;
- rotating the tool and applying the tool at the interface, so that the pin (12) penetrates into the parts (21, 22), until the shoulder (11) of the tool is applied against the parts, exerting pressure on the latter;
- translating the rotary tool thus disposed, along the interface (23), so as to obtain a weld between the parts by friction stir.

10. The method according to claim 9 wherein each of the parts is formed from an aluminium alloy.

11. The method according to claim 9 or claim 10, wherein the tool is translated over a distance greater than 10 m, or even greater than 12 meters or 15 meters, along the interface (23) between the parts.

12. The method according to any one of claims 9 to 11, the thickness of the parts being greater than 25 mm, preferably 30 mm, even more preferably 40 mm, the thickness extending along the longitudinal axis (Z).
